# FASCICULE DE BREVET EUROPEEN

(11) **EP 2 032 380 B1**
(45) Date de publication et mention de la délivrance du brevet: **14.07.2010**
(21) Numéro de dépôt: 07766069.4
(22) Date de dépôt: 16.05.2007
(51) Int. Cl.: B60J 10/04, B60J 10/00

(54) **JOINT D'ETANCHEITE DE VITRE AVEC BRIN LECHEUR MOULE**
FENSTERDICHTUNG MIT GEFORMTER DICHTUNG
WINDOW WEATHERSEAL WITH MOLDED WEATHERSTRIP

(30) Priorité: 18.05.2006 FR 0651807
(43) Date de publication de la demande: 11.03.2009
(73) Titulaire: Cooper-Standard Automotive France S.A., 95100 Argenteuil (FR)
(72) Inventeur: STEFANELLI, Didier, F-35210 Saint Christophe Des Bois (FR)
(74) Mandataire: Barbin le Bourhis, Joël
(86) Numéro de dépôt international: PCT/FR2007/051295
(87) Numéro de publication internationale: WO 2007/135329

(56) Documents cités:
- EP-A1- 0 678 412
- EP-A1- 0 983 891
- EP-A2- 0 422 592
- DE-A1- 3 843 057
- DE-A1-102004 059 384
- FR-A1- 2 856 331
- US-A- 5 433 038

## Description

La présente invention concerne le domaine des joints d'étanchéités de vitres.

L'invention concerne plus particulièrement le domaine des joints d'étanchéité de vitre à encastrer dans un châssis, destinés à être en contact avec une partie du contour d'une vitre, et comportant un brin coulisse constitué de deux segments ascendants et d'un segment supérieur, et un brin lécheur s'étendant entre une partie basse d'un desdits segments ascendants et une partie haute de l'autre desdits segments ascendants.

Dans les pièces de carrosserie comportant une vitre coulissante, comme typiquement une portière de véhicule automobile, la vitre coulisse selon une direction sensiblement verticale. Dans sa position ouverte, la vitre est en position basse, complètement ou partiellement rentrée dans l'épaisseur de la portière entre les surfaces extérieures et intérieures de celle-ci; en passant de sa position ouverte vers sa position fermée, la vitre sort par le bord supérieur de la portière. Dans sa position fermée, la vitre est en position haute et la partie inférieure de son pourtour (bord inférieur, et portions inférieures des bords avant et arrière) reste insérée dans l'épaisseur de la portière, tandis que le bord supérieur et les bords avant et arrière viennent respectivement en contact avec les montants supérieur, avant et arrière formant le châssis de la portière. Afin d'assurer l'étanchéité entre le châssis de la portière et la vitre lorsque celle-ci est en position fermée, d'une part un joint d'étanchéité (brin coulisse) continu est encastré dans ces montants, d'autre part le bord supérieur de la portière est muni d'un joint d'étanchéité (brin lécheur) qui vient en regard la vitre. Ce brin lécheur est muni d'un revêtement glissant, par exemple d'une lèvre flockée. Le flockage est un procédé qui consiste à déposer sur un élément des poils perpendiculaires à celui-ci par un moyen électrostatique et à les fixer avec de la colle. Ces poils viennent frotter sur la vitre lorsque celle-ci passe d'une position ouverte à fermée et vice-versa, et ont pour but d'éviter que de l'eau ou d'autres éléments pénètrent dans l'épaisseur de la portière entre les surfaces extérieure et intérieure de celle-ci. Les brins coulisse et lécheur et le revêtement glissant, par exemple la lèvre flockée, sont typiquement réalisés en élastomère, en thermoplastique, ou en élastomère thermoplastique (TPE).

Dans la demande de brevet EP 0678412, il est décrit un joint d'étanchéité de vitre à encastrer dans un châssis, destiné à être en contact avec une partie du contour d'une vitre, et comportant un brin coulisse constitué de deux segments ascendants et d'un segment supérieur, et un brin lécheur s'étendant entre une partie basse d'un des segments ascendants et une partie haute de l'autre des segments ascendants, le brin lécheur comportant une partie incurvée ascendante, et étant joint au moins en son extrémité supérieure à l'un desdits segments ascendants du brin coulisse, et étant composé de deux parties : d'une part une partie horizontale qui comporte un élément métallique et une partie extrudée en élastomère, et d'autre part une partie verticale/courbée.

Le brevet US 5433038 décrit un joint d'étanchéité pour sceller l'ouverture entre la périphérie d'un cadre de fenêtre de véhicule et une fenêtre coulissante, qui comprend une armature allongée relativement rigide en thermoplastique comportant au moins un moyen d'attache en thermoplastique qui lui est intégralement lié et qui est apte à être inséré dans une ouverture ou fente d'une plaque en métal formant la périphérie de l'ouverture du cadre de fenêtre, et comportant un élément d'obturation relativement flexible en élastomère qui est joint à l'armature en thermoplastique. Le joint d'étanchéité réduit le nombre de composants séparés et le nombre d'étapes requis pour monter un joint d'étanchéité sur le cadre d'une fenêtre d'un véhicule.

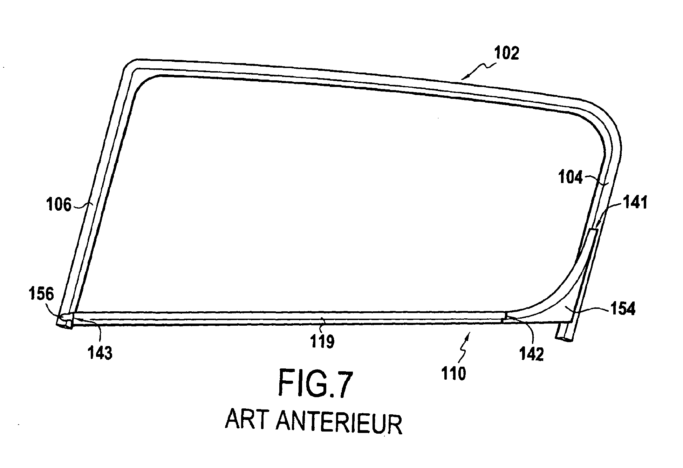

La Figure 7 représente un joint d'étanchéité selon l'art antérieur. Ce joint d'étanchéité comprend un brin coulisse 102 et un brin lécheur 110. Le brin coulisse est extrudé, et le brin lécheur est constitué d'une partie extrudée 119, et d'un raccord moulé 154. Le brin coulisse 102 et la partie extrudée du brin lécheur 119 comportent souvent une armature en métal. La partie extrudée du brin lécheur 119 est raccordé au segment ascendant arrière 104 du brin coulisse par l'intermédiaire du raccord moulé 154. Ce raccord moulé est indispensable pour effectuer un raccord étanche entre la partie arrière du brin lécheur 110 et le segment ascendant arrière 104 du brin coulisse. Il possède, au niveau du coin inférieur arrière du châssis de la portière, une forme incurvée dont la fonction est esthétique (raccordement de style). La jonction entre la partie avant du brin lécheur 110 et le segment ascendant avant 106 du brin coulisse est quant à elle réalisée par l'intermédiaire d'un raccord moulé avant 156.

Le brin lécheur 110 et le brin coulisse 102 étant extrudés, leur jonction avec le raccord moulé 154 occasionne nécessairement l'apparition d'une première ligne de jonction 141 entre le raccord moulé 154 et le segment ascendant arrière 104 du brin coulisse, et d'une seconde ligne de jonction 142 entre le brin lécheur 110 et le raccord moulé 154. La jonction entre le brin lécheur 110 et le raccord moulé avant 156 occasionne l'apparition d'une troisième ligne de jonction 143. Ces lignes de jonction présentent l'aspect d'un bourrelet et sont visibles, et ce d'autant plus que l'évolution de forme de la section entre le brin lécheur 110 et le segment ascendant arrière du brin coulisse 104 est importante. Leur visibilité est renforcée par la différence de teinte qui apparaît toujours au vieillissement entre une pièce extrudée telle que les brins lécheur et coulisse, et une pièce moulée. Ces lignes de jonctions sont donc esthétiquement indésirables. De plus, la zone intérieure du raccord moulé 154 doit être reprise en flockage ou autre revêtement glissant afin d'assurer la résistance à l'abrasion entre la portière et la vitre. Cette reprise doit nécessairement être fait manuellement, elle est donc d'une qualité inférieure, est peu pratique, et génère des coûts supplémentaires. Par ailleurs, les brins lécheur et coulisse comportant une armature en métal, leur recyclage est moins facile et plus coûteux.

La présente invention vise à remédier à ces inconvénients.

L'invention vise à proposer un nouveau type de joint d'étanchéité de vitre de portière qui permette de diminuer le nombre de lignes de jonction entre le brin coulisse et le brin lécheur, à faciliter la fabrication du joint d'étanchéité, à diminuer les coûts de fabrication, et à permettre un meilleur recyclage des brins.

Ce but est atteint grâce au fait que le brin lécheur est moulé en une seule pièce et comporte une partie incurvée ascendante, et que brin lécheur est joint au moins en son extrémité supérieure à l'un des segments ascendants du brin coulisse.

Par exemple, la jonction entre le brin lécheur et l'un des segments ascendants du brin coulisse se situe près du segment supérieur du brin coulisse.

Grâce à ces dispositions, il n'est plus nécessaire d'utiliser un raccord moulé entre le brin lécheur et le segment ascendant (en général le segment arrière) du brin coulisse, puisque le brin lécheur est moulé. Il n'y a donc plus qu'une seule ligne de jonction entre le brin lécheur et le segment ascendant arrière du brin coulisse. De plus, l'autre partie du brin lécheur (en général sa partie avant) est moulée de telle sorte qu'elle croise le segment ascendant (dans ce cas le segment avant) du brin coulisse, supprimant la nécessité d'un raccord moulé entre la partie avant du brin lécheur et le segment ascendant avant du brin coulisse. Au total, il n'y a donc plus qu'une seule ligne de jonction entre le brin coulisse et le brin lécheur, au lieu de trois lignes de jonction. Globalement, la fabrication du joint d'étanchéité est facilitée et est moins onéreuse, puisqu'il n'est plus nécessaire d'utiliser de raccord moulé.

Avantageusement, le brin lécheur est fabriqué par bi-injection d'un matériau rigide et d'un matériau souple, définissant dans le brin lécheur une partie rigide et une partie souple, distinctes.

Par exemple, la partie rigide peut être réalisée en plastique rigide et la partie souple réalisée en élastomère.

Grâce à ces dispositions, il n'est plus nécessaire de renforcer le brin lécheur par une armature métallique. La fabrication du brin lécheur est donc facilitée, et son recyclage est facilité et moins onéreux.

Avantageusement, la partie rigide du brin lécheur comporte des moyens de maintien sur ledit châssis.

Le montage du joint d'étanchéité sur le châssis est donc facilité, son efficacité améliorée, et son coût total de fabrication diminué.

Avantageusement, au moins une partie de la longueur dudit brin lécheur est pourvue d'un revêtement glissant.

Par exemple, ce revêtement glissant est un profil flocké.

Par exemple, le revêtement glissant ou profil flocké est rapporté sur le brin lécheur, ou est co-moulé sur ledit brin lécheur.

Ainsi, il n'est plus nécessaire d'effectuer de reprise en flockage de la zone intérieure du raccord moulé, un profil flocké pouvant être maintenu sur toute la longueur du brin lécheur.

Avantageusement, le revêtement glissant est une lèvre.

Avantageusement, une portion de la partie incurvée ascendante remplace une partie dudit segment ascendant du brin coulisse qui a été enlevée.

Cette configuration permet d'obtenir une meilleure continuité entre la partie incurvée ascendante du brin lécheur et le segment ascendant du brin coulisse

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1 est une vue de face du joint d'étanchéité selon l'invention,
- la figure 2 est une section transversale selon la ligne II-II de la figure 1,
- la figure 3 est une section transversale selon la ligne III-III de la figure 1,
- la figure 4 est une vue en perspective du brin lécheur selon l'invention.
- la figure 5 est une vue en perspective du brin lécheur selon l'invention portant une lèvre flockée.
- la figure 6 est une section transversale selon la ligne VI-VI de la figure 5.
- la figure 7 est un mode de réalisation d'un joint d'étanchéité selon l'art antérieur.

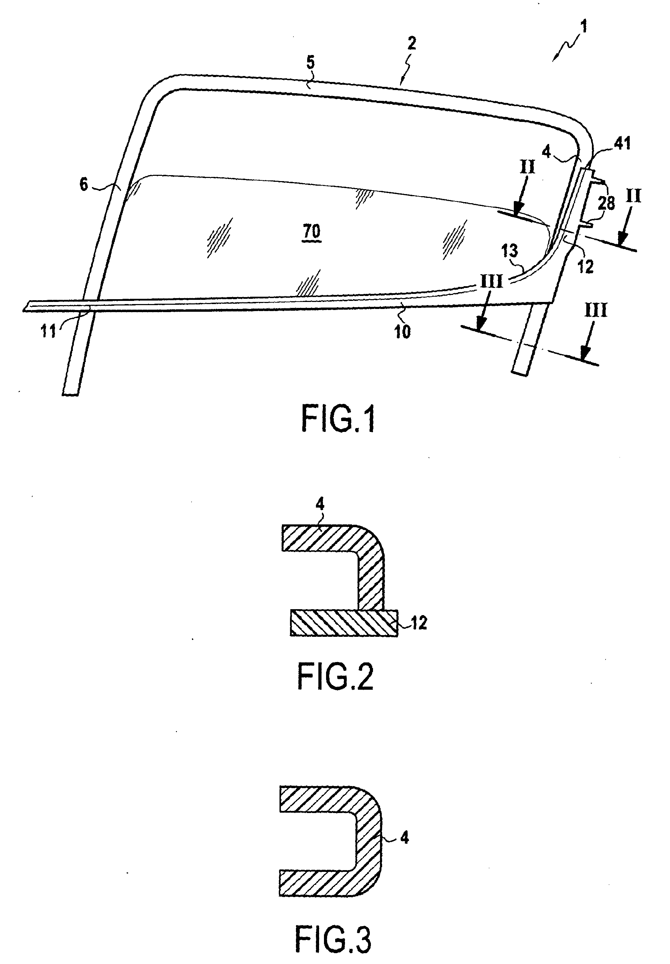

Comme représenté sur la figure 1, le joint d'étanchéité 1 est composé d'un brin coulisse 2 et d'un brin lécheur 10. Le brin coulisse 2 est constitué de trois segments formant un ensemble continu : un segment ascendant arrière 4, un segment horizontal 5, un segment ascendant avant 6. Le brin coulisse 2 est encastré dans les montants arrière, supérieur et avant formant le châssis de la portière (non représentée) dans lequel la vitre vient coulisser. Le brin coulisse 2 possède donc sensiblement le profil d'un "U". Sur la figure 1, la vitre 70 est représentée à mi-chemin entre sa position ouverte et sa position fermée. Lorsque la vitre 70 est en position fermée (position haute), son bord supérieur vient en contact avec le segment horizontal 5 du brin coulisse, tandis que ses bords arrière et avant sont respectivement en contact sur toute leur longueur avec le segment ascendant arrière 4 et le segment ascendant avant 6 du brin coulisse. Le segment ascendant arrière 4 et le segment ascendant avant 6 du brin coulisse sont reliés par le brin lécheur 10. Le brin lécheur est moulé, ce qui permet de donner à sa partie avant 11 une forme épousant la surface extérieure du segment ascendant avant 6 du brin coulisse. Une ligne de jonction entre la partie avant 11 du brin lécheur et le segment ascendant avant 6 du brin coulisse n'est donc plus nécessaire.

Dans sa partie arrière, le brin lécheur 10 tourne pour se terminer par une partie ascendante 12 sensiblement alignée avec le segment ascendant arrière 4 du brin coulisse. Le bord concave 13 du brin lécheur au niveau du tournant (coin inférieur arrière du châssis de la portière) a une forme incurvée.

L'extrémité supérieure de la partie ascendante 12 du brin lécheur 10 est jointe au segment ascendant 4 du brin coulisse 2 par une ligne de jonction 41. Au total, la jonction entre le brin coulisse 2 et le brin lécheur 10 comporte une seule ligne de jonction 41. Une ligne de jonction entre un matériau extrudé tel que le brin coulisse et un matériau moulé tel que le brin lécheur selon l'invention présente l'aspect d'un bourrelet. De par la présence d'une seule ligne de jonction, l'esthétique globale et la solidité du joint d'étanchéité 1 selon l'invention sont donc améliorées.

La figure 2 est une coupe transversale du joint d'étanchéité 1 selon la ligne II-II, au niveau où la partie ascendante 12 du brin lécheur se superpose au segment ascendant 4 du brin coulisse. On note que la partie ascendante 12 du brin lécheur s'agence de façon à former un "U" dans lequel la vitre 70 est destinée à coulisser lors de son mouvement entre sa position ouverte et sa position fermée. Sur la portion où elle se superpose au segment ascendant 4 du brin coulisse, la partie ascendante 12 du brin lécheur vient donc se substituer à un morceau du segment ascendant 4 du brin coulisse qui a été enlevé.

La figure 3 est une coupe transversale du joint d'étanchéité 1 selon la ligne III-III, au niveau où la partie ascendante 12 du brin lécheur n'est pas en contact avec le segment ascendant 4 du brin coulisse. Le segment ascendant 4 du brin coulisse forme alors la totalité de la rainure en forme de "U" dans lequel la vitre 70 est destinée à coulisser lors de son mouvement entre sa position ouverte et sa position fermée. Dans le mode de représentation décrit ci-dessus, l'enlèvement d'un morceau du segment ascendant 4 du brin coulisse auquel vient se substituer la partie ascendante 12 du brin lécheur permet un encastrement optimal du joint d'étanchéité 1 dans le châssis de la portière.

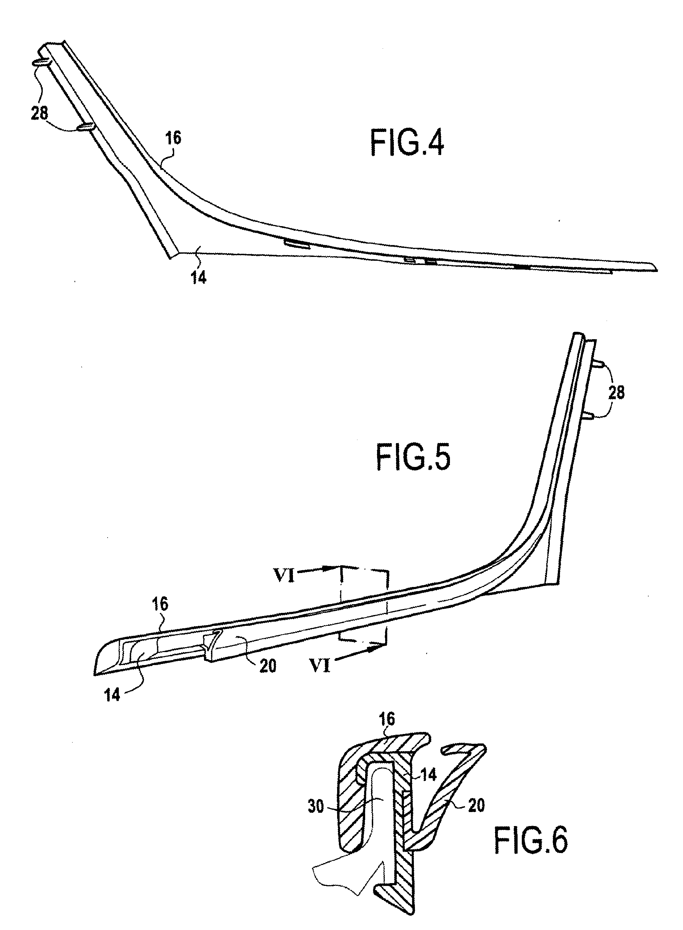

La figure 4 est une vue en perspective du brin lécheur 10. Le brin lécheur 10 est réalisé d'une seule pièce, par exemple par moulage. Dans le cas d'une fabrication par moulage, deux polymères sont bi-injectés dans le moule pour obtenir au final un brin lécheur comportant une partie rigide 14 et une partie souple 16. La partie rigide 14 est par exemple en plastique rigide et la partie souple en élastomère souple. La partie rigide 14 forme le bord convexe du brin lécheur 10, tandis que la partie souple 16 forme le bord concave du brin lécheur 10. Le brin lécheur 10 est destiné à être fixé sur le châssis de la portière par la partie rigide 14 du brin lécheur.

La partie rigide 14 du brin lécheur 10 comporte sur son bord vertical des moyens d'accrochage 28 sur le montant ascendant arrière (non représenté) du châssis (figures 1, 4, et 5).

La figure 5 est une autre vue en perspective du brin lécheur, montrant le profil destiné à être flocké, et fixé sur la partie rigide 14 du brin lécheur 10. Sur la figure 5, le profil est représenté comme ayant la forme d'une lèvre 20. Cette forme du profil 20 permet d'assurer un meilleur frottement entre les poils du flockage qui seront fixés sur le profil 20, et la vitre 70, ceci afin d'éviter que de l'eau ou d'autres éléments pénètrent entre la vitre et le châssis de la portière.

La figure 6 montre l'ensemble du brin lécheur 10 et du profil flocké 20 en coupe transversale. La portion supérieure de la partie souple 16 recouvre le bord supérieur de la partie rigide 14. Le profil flocké 20 est fixé sur une portion verticale de la partie rigide 14 du brin lécheur 10, à l'opposé du bord 30 du châssis de la portière. La partie rigide 14 du brin lécheur 10 est à son tour fixée sur le bord 30 du châssis de la portière. Une portion inférieure de la partie souple 16 s'étend vers le bas de telle sorte que le bord 30 du châssis sur lequel la partie rigide 14 est destinée à être fixée se trouve entre la portion inférieure de la partie rigide 14 et cette portion inférieure de la partie souple 16.

Le brin lécheur 10 représenté sur les figures 1 à 6 l'est seulement à titre d'exemple non limitatif. Le brin lécheur 10 pourrait avoir une forme différente, dans les limites de la portée de la présente invention. Par exemple, le bord concave 13 du brin lécheur 10 pourrait former un angle au lieu d'être incurvé.

Par ailleurs, le brin lécheur 10 a été représenté sur certaines figures pourvu d'un profil flocké 20. Il pourrait alternativement être pourvu d'un autre revêtement glissant destiné à remplir les mêmes fonctions qu'un profil flocké.

## Revendications

1. Joint d'étanchéité de vitre à encastrer dans un châssis, destiné à être en contact avec une partie du contour d'une vitre, et comportant un brin coulisse (2) constitué de deux segments ascendants (4, 6) et d'un segment supérieur(5), et un brin lécheur (10) comportant une extrémité supérieure et s'étendant entre une partie basse d'un desdits segments ascendants et une partie haute de l'autre desdits segments ascendants, **caractérisé en ce que** ledit brin lécheur est moulé en une seule pièce et comporte une partie incurvée ascendante (12), et **en ce que** ledit brin lécheur est joint au moins en son extrémité supérieure à l'un desdits segments ascendants du brin coulisse.

2. Joint d'étanchéité selon la revendication 1, **caractérisé en ce que** le brin lécheur (10) est fabriqué par bi-injection d'un matériau rigide et d'un matériau souple, définissant dans ledit brin lécheur une partie rigide (14) et une partie souple (16), distinctes.

3. Joint d'étanchéité selon la revendication 2, **caractérisé en ce que** ladite partie rigide (14) comporte des moyens de maintien (28) sur ledit châssis.

4. Joint d'étanchéité selon la revendication 3, **caractérisé en ce qu'**une portion supérieure de ladite partie souple recouvre le bord supérieur de ladite partie rigide.

5. Joint d'étanchéité selon l'une des revendications 3 à 4, **caractérisé en ce qu'**une portion inférieure de ladite partie souple (16) s'étend vers le bas de telle sorte que le bord (30) dudit châssis sur lequel ladite partie rigide (14) est destinée à être fixée se trouve entre une portion inférieure de ladite partie rigide et ladite portion inférieure de ladite partie souple.

6. Joint d'étanchéité selon l'une quelconque des revendications 2 à 5, **caractérisé en ce que** ladite partie rigide (14) est en plastique rigide et ladite partie souple (16) est en élastomère ou en thermoplastique.

7. Joint d'étanchéité selon l'une quelconque des revendications 1 à 6, **caractérisé en ce que** la jonction (41) entre ledit brin lécheur (10) et l'un desdits segments ascendants (4,6) du brin coulisse se situe près dudit segment supérieur (5) du brin coulisse.

8. Joint d'étanchéité selon l'une quelconque des revendications 1 à 7, **caractérisé en ce qu'**au moins une partie de la longueur dudit brin lécheur (10) est pourvue d'un revêtement glissant.

9. Joint d'étanchéité selon la revendication 8, **caractérisé en ce que** ledit revêtement glissant est un profil flocké (20).

10. Joint d'étanchéité selon la revendication 8 ou 9, **caractérisé en ce que** ledit revêtement glissant est rapporté sur ledit brin lécheur (10).

11. Joint d'étanchéité selon la revendication 8 ou 9, **caractérisé en ce que** ledit revêtement glissant est fixé sur ledit brin lécheur (10).

12. Joint d'étanchéité selon l'une quelconque des revendications 8 à 11, **caractérisé en ce que** ledit revêtement glissant est une lèvre.

13. Joint d'étanchéité selon l'une quelconque des revendications 1 à 11, **caractérisé en ce qu'**une portion de ladite partie incurvée ascendante (12) remplace une partie dudit segment ascendant (4, 6) du brin coulisse qui a été enlevée.

## Claims

1. Window seal to be encased in a frame, intended to be in contact with part of the perimeter of a window, and comprising a guide slot strip (2) consisting of two upward segments (4, 6) and an upper segment (5), and a sealing strip (10) comprising an upper end and extending between a low part of one of said upward segments and a high part of the other of said upward segments, **characterised in that** said sealing strip is moulded in a single piece and comprises an upward curved part (12), and **in that** said sealing strip is attached at least at its upper end to one of said upward segments of the guide slot strip.

2. Seal according to claim 1, **characterised in that** the sealing strip (10) is manufactured by bi-injection of a rigid material and a flexible material, defining in said sealing strip a rigid part (14) and a flexible part (16) which are distinct.

3. Seal according to claim 2, **characterised in that** said rigid part (14) comprises means (28) for holding on said frame.

4. Seal according to claim 3, **characterised in that** an upper portion of said flexible part covers the upper edge of said rigid part.

5. Seal according to claim 3 or claim 4, **characterised in that** a lower portion of said flexible part (16) extends downwards so that the edge (30) of said frame to which said rigid part (14) is intended to be fixed is situated between a lower portion of said rigid part and said lower portion of said flexible part.

6. Seal according to any one of claims 2 to 5, **characterised in that** said rigid part (14) is made from rigid plastic and said flexible part (16) is made from elastomer or thermoplastic.

7. Seal according to any one of claims 1 to 6, **characterised in that** the junction (41) between said sealing strip (10) and one of said upward segments (4, 6) of the guide slot strip is situated close to said upper segment (5) of the guide slot strip.

8. Seal according to any one of claims 1 to 7, **characterised in that** at least part of the length of said sealing strip (10) is provided with a slippery coating.

9. Seal according to claim 8, **characterised in that** said slippery coating is a flocked profile (20).

10. Seal according to Claim 8 or claim 9, **characterised in that** said slippery coating is added on to said sealing strip (10).

11. Seal according to Claim 8 or claim 9, **characterised in that** said slippery coating is fixed to said sealing strip (10).

12. Seal according to any one of claims 8 to 11, **characterised in that** said slippery coating is a lip.

13. Seal according to any one of claims 1 to 11, **characterised in that** a portion of said upward curved part (12) replaces a part of said upward segment (4, 6) of the guide slot strip which has been removed.

## Patentansprüche

1. Dichtung einer in einen Rahmen einzubauenden Glasscheibe, die dazu bestimmt ist, mit einem Teil der Kontur einer Glasscheibe in Kontakt zu sein, und die einen Gleitstrang (2) bestehend aus zwei nach oben verlaufenden Abschnitten (4, 6) und einem oberen Abschnitt (5) sowie einen Abstreifstrang (10) umfaßt, der ein oberes Ende aufweist und sich zwischen einem unteren Teil von einem der nach oben verlaufenden Abschnitte und einem oberen Teil des anderen der nach oben verlaufenden Abschnitte erstreckt, **dadurch gekennzeichnet, daß** der Abstreifstrang einstückig geformt ist und einen nach oben verlaufenden gekrümmten Teil (12) umfaßt, und daß der Abstreifstrang wenigstens an seinem oberen Ende mit einem der nach oben verlaufenden Abschnitte des Gleitstrangs verbunden ist.

2. Dichtung nach Anspruch 1, **dadurch gekennzeichnet, daß** der Abstreifstrang (10) durch gleichzeitiges Einspritzen eines starren Materials und eines flexiblen Materials gefertigt ist, die in dem Abstreifstrang einen gesonderten starren Teil (14) und gesonderten flexiblen Teil (16) definieren.

3. Dichtung nach Anspruch 2, **dadurch gekennzeichnet, daß** der starre Teil (14) Mittel zum Halten (28) an dem Rahmen umfaßt.

4. Dichtung nach Anspruch 3, **dadurch gekennzeichnet, daß** ein oberer Abschnitt des flexiblen Teils den oberen Rand des starren Teils bedeckt.

5. Dichtung nach einem der Ansprüche 3 bis 4, **dadurch gekennzeichnet, daß** ein unterer Abschnitt des flexiblen Teils (16) derart nach unten verläuft, daß der Rand (30) des Rahmens, an dem der starre Teil (14) befestigt werden soll, sich zwischen einem unteren Abschnitt des starren Teils und dem unteren Abschnitt des flexiblen Teils befindet.

6. Dichtung nach einem der Ansprüche 2 bis 5, **dadurch gekennzeichnet, daß** der starre Teil (14) aus starrem Kunststoff und der flexible Teil (16) aus Elastomer oder aus Thermoplast besteht.

7. Dichtung nach einem der Ansprüche 1 bis 6, **dadurch gekennzeichnet, daß** die Verbindung (41) zwischen dem Abstreifstrang (10) und einem der nach oben verlaufenden Abschnitte (4, 6) des Gleitstrangs nahe dem oberen Abschnitt (5) des Gleitstrangs gelegen ist.

8. Dichtung nach einem der Ansprüche 1 bis 7, **dadurch gekennzeichnet, daß** wenigstens ein Teil der Länge des Abstreifstrangs (10) mit einer Gleitbeschichtung versehen ist.

9. Dichtung nach Anspruch 8, **dadurch gekennzeichnet, daß** die Gleitbeschichtung ein beflocktes Profil (20) ist.

10. Dichtung nach Anspruch 8 oder 9, **dadurch gekennzeichnet, daß** die Gleitbeschichtung an den Abstreifstrang (10) angefügt ist.

11. Dichtung nach Anspruch 8 oder 9, **dadurch gekennzeichnet, daß** die Gleitbeschichtung an dem Abstreifstrang (10) befestigt ist.

12. Dichtung nach einem der Ansprüche 8 bis 11, **dadurch gekennzeichnet, daß** die Gleitbeschichtung eine Lippe ist.

13. Dichtung nach einem der Ansprüche 1 bis 11, **dadurch gekennzeichnet, daß** ein Abschnitt des nach oben verlaufenden gekrümmten Teils (12) einen Teil des nach oben verlaufenden Abschnitts (4, 6) des Gleitstrangs ersetzt, der entfernt worden ist.
